# EUROPEAN PATENT APPLICATION

(11) **EP 2 851 375 A1**
(43) Date of publication of application: **25.03.2015**
(21) Application number: 13185213.9
(22) Date of filing: 19.09.2013
(51) Int. Cl.: C08F 220/04

(54) **Novel polymers from Urocanic acid (4-Imidazolacrylic acid)**

(71) Applicant: BASF SE, 67056 Ludwigshafen (DE)
(72) Inventor: Schade, Christian, 67063 Ludwigshafen (DE)
(74) Representative: Maiwald Patentanwalts GmbH

(57) **Abstract**

Copolymer comprising units derived from an urocanic acid-type monomer and at least one additional ethylenically unsaturated monomer.

## Description

The present invention relates to (meth)acrylic-type copolymers useful for laundry and cosmetic applications and a process for preparing these copolymers.

Urocanic acid (4-imidazolacrylic acid) and its derivatives are unusual monomers due to its amphiphilic character. The basic monomeric structure of urocanic acid includes H-donor functionality as well as H-acceptor functionality as provided by the imidazole moiety.

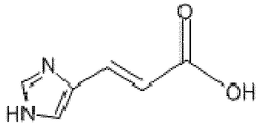

Urocanic acid is a natural product which is enzymatically available from histidine. It can also be found in the skin where it acts as endogenous sunscreen or photoprotectant against UVB-induced DNA damage.

However, the polymer chemistry of urocanic acid-type monomers has surprisingly not been studied in detail so far. Neither the synthesis of urocanic acid homopolymers nor the synthesis of urocanic acid copolymers has been reported in the prior art with the exception of the 2+2 cycloaddition of urocanic acid that has been reported previously.

Accordingly, it would be desirable to prepare copolymers with new properties from urocanic acid type monomers thereof.

It is therefore an object of the present invention to provide for the first time new urocanic acid-type copolymers. It is in particular a further object of the present invention to provide urocanic acid-type copolymers which can offer amphoteric properties based on the presence of an imid-azole moiety.

The present invention is directed to a copolymer comprising units derived from
(A) at least one urocanic acid-type monomer of formula (I) or a salt thereof 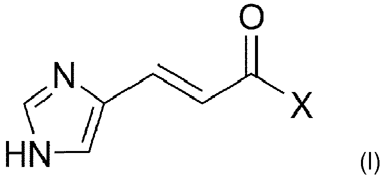 wherein X is OR¹ or NR²R³,
   wherein further
   R¹ is H or C₁-C₆ alkyl, and
   R² and R³ are independently from each other H or C₁-C₆ alkyl;
   and
(B) at least one ethylenically unsaturated monomer different to the monomer of formula (I) or its salt thereof.

The present invention is also directed to a radical polymerization process for the preparation of a copolymer comprising at least the steps of
(a) optionally protonating one urocanic acid-type monomer (A) of formula (I) and then
(b) copolymerizing the protonated monomer (A) with at least one ethylenically unsaturated monomer (B), obtaining thereby the copolymer according to the present invention.

The present invention also is directed to the use of the urocanic acid-based acrylic copolymers in laundry cleaning compositions, laundry detergents and cosmetic compositions.

In another preferred embodiment of the present invention, the cosmetic composition is a skin cleansing composition, a composition for care and protection of the skin, a nail care composition, a formulation for decorative cosmetics or a hair treatment composition.

In the following the present invention is described in more detail.

The urocanic acid-type monomer (A) of formula (I) is defined as follows.

The urocanic acid-type monomer (A) of formula (I) can be the urocanic acid as such or derivatives thereof. Accordingly substituent X of urocanic acid-type monomer of formula (I) is preferably OR¹ or NR²R³.

The substituents R¹, R² and R³ are independently selected from each other from the group consisting of H and C₁-C₆ alkyl, including methyl, ethyl, propyl, isopropyl, n-butyl, 2-butyl, sec-butyl, tert-butyl, n-pentyl, 2-pentyl, 2-methylbutyl, 3-methylbutyl, 1,2-dimethylpropyl, 1,1-dimethylpropyl, 2,2-dimethylpropyl, 1-ethylpropyl, n-hexyl, 2-hexyl, 2-methylpentyl, 3-methylpentyl, 4-methylpentyl, 1,2-dimethylbutyl, 1,3-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, 1-ethyl-2-methylpropyl. Preferably the substituents R¹, R² and R³ are H.

Thus in one particular preferred embodiment the urocanic acid-type monomer (A) of formula (I) or its salt thereof is used, wherein the substituent X is OH (or O-).

The ethylenically unsaturated monomer (B) is preferably water soluble. Accordingly the ethylenically unsaturated, hydrophilic monomer (B) according to the present invention is preferably any monomer having at least one double bond whose homopolymer preferably is watersoluble, i.e. does not form a precipitate, but instead forms a clear solution in water at 25 °C, at 1 bar and at a concentration of 1 % by weight of the homopolymer.

While the ethylenically unsaturated monomer (B) is preferably water soluble, ethylenically unsaturated monomers (B) which are only partially water soluble or even water insoluble according to the above definition for water solubility may still be included in the present invention albeit being less preferred.

Such monomers (B) which are only partially water soluble or even not water soluble include methyl acrylate, ethyl acrylate, propyl acrylate, isopropyl acrylate, n-butyl acrylate, isobutyl acry-late, pentyl acrylate, hexyl acrylate, heptyl acrylate, octyl acrylate, nonyl acrylate, decyl acrylate, 2-ethylhexyl acrylate, methyl methacrylate, ethyl methacrylate, propyl methacrylate, isopropyl methacrylate, n-butyl methacrylate, isobutyl methacrylate, pentyl methacrylate, hexyl methacry-late, heptyl methacrylate, octyl methacrylate, nonyl methacrylate, decyl methacrylate, 2-ethylhexyl methacrylate and the like.

The ethylenically unsaturated, hydrophilic monomer (B) is in one preferred embodiment a non-aromatic ethylenically unsaturated monomer.

Further preferred ethylenically unsaturated monomers (B) according to the present invention include esters of vinyl alcohol and monocarboxylic acids having from 1 to 18 carbon atoms, vi-nyl acetate, vinyl propionate, vinyl n-butyrate, and the like, α,β-monoethylenically unsaturated monocarboxylic acids and dicarboxylic acids having from 3 to 10 carbon atoms, including methacrylic acid, acrylic acid, fumaric acid, itaconic acid, crotonic acid, maleic acid, fumaric acid and the like, esters of α,β-monoethylenically unsaturated monocarboxylic acids and dicarboxylic acids having from 3 to 10 carbon atoms with alkanols having from 1 to 12 carbon atoms, includ-ing hydroxyethyl acrylate, hydroxyethyl(meth)acrylate, hydroxypropyl(meth)acrylate, hydroxybutyl(meth)acrylate, ethyldiglycol(meth)acrylate, hydroxypropylcarbamat(meth)acrylate, ureido(meth)acrylate, acetoacetoxyethyl(meth)acrylate, hydroxyethylpyrrolidon(meth)acrylate, tert.-butylaminoethyl(meth)acrylate, diethylaminoethyl(meth)acrylate, dimethylaminoethyl(meth)acrylate, monomers of formula B'

X-O-(CH₂-CHRO)ₙ-(CH₂CHR'O)ₘ-R" (B')

with X = allyl, methallyl, vinyl, isoprenyl, or a group derived from α,β-monoethylenically unsaturated monocarboxylic acids and dicarboxylic acids having from 3 to 10 carbon atoms R, R', R" independently selected from H, C₁ - C₃₀ alkyl, and n, m = 0 - 60, nitriles of α,β-monoethylenically unsaturated monocarboxylic acids and dicarboxylic acids having from 3 to 10 carbon atoms, including acrylonitrile, methacrylonitrile, fumaronitrile, maleonitrile and the like, amides of α,β-monoethylenically unsaturated monocarboxylic acids and dicarboxylic acids having from 3 to 10 carbon atoms, including acrylamide, methacrylamide, N-methylacrylamide, N-methylmethacrylamide, N,N'-dimethylacrylamide, N,N'-dimethylmethacrylamide, N-methylolmethacrylamide, N-methylolacrylamide, dimethylaminopropylmethacrylamide, N-vinylformamide, methacrylamidoethyltrimethyl ammonium halide and the like, vinyl- and allyl-substituted heteroaromatic compounds, including vinyl-and allyl-substituted pyridines, pyrimidines, pyrroles and imidazoles, preferably 2-, 3- and 4-vinylpyridine, allylpyridine, N-vinylimidazole, and N-vinyl-2-methylimidazole, as well as derivatives thereof, N-vinyl compounds like N-vinylprrolidone, N-vinyl-caprolactame, N-vinyl-N-methylacetamide, N-vinylformamide, monoethylenally unsaturated monomers with one or several quaternized nitrogen groups, e. g. tri(m)ethylammonium-ethyl-(meth)acrylate with counterion chloride, methylsulfate, ethylsulfate, tri(m)ethylammonium-ethyl/propyl-(meth)acrylamide with counterion chloride, methylsulfate, ethylsulfate, 1-vinyl-3-methyl- or ethyl--imidazolium chlorid, methylsulfate or ethylsulfate, vinyl- or allylethers like methylvinylether, ethylvinylether, propylvinylether, isobutylvinylether, tert.-butylvinylether, 2-ethylhexylvinylether, vinylcyclohexylether, vinyl-4-hydroxybutylether, decylvinylether, dodecylvinylether, octadecylvinylether, hydroxybutylvinylether, 2-aminoethylvinylether, 2-(diethylamino)ethylvinylether, 2-(di-n-butyl-amino)ethylvinylether or methyldiglykolvinylether or the corresponding allyl compounds, acidic monomers like vinylphosphonic acid, ester of hydroxyethyl or hydroxypropyl(meth)acrylate with (poly)phosphoric acid, allylphosphonic acid, 2-acrylamido-2-methylpropansulfonic acid, vinylsulfonic acid, 2-acrylamidomethyldodecylsulfonic acid, 2-(meth)acryloxyethansulfonic acid, 3-(meth)acryloxypropansulfonic acid, allyloxybenzolsulfonic acid, vinylbenzenesulfonic acid, vinyltoluenesulfonic acid, allylsulfonic acid, methallylsulfonic acid.

All acids may be also employed in partially or completely neutralized from.

Preferred monomers (B) are ethylenically unsaturated monomers (B) selected from the group consisting of α,β-monoethylenically unsaturated carbonyl compounds, vinyl-substituted imidazoles and acrylonitrile compounds. Most preferred are monomers (B) selected from the group consisting of acrylic acid, methacrylic acid, maleic acid, fumaric acid, itaconic acid, crotonic acid, acrylamide, methacrylamide, N-vinylimidazole and acrylonitrile. The ethylenically unsaturated monomer (B) according to the present invention is different from the urocanic acid-type monomer (A) according to formula (I). That is, the copolymer according to the present invention excludes any homopolymeric product. In a preferred embodiment the ethylenically unsaturated monomers (B) are methacrylic acid and/or acrylic acid.

In one embodiment, the ethylenically unsaturated monomers (B) are derivatives of N-vinylimidazole 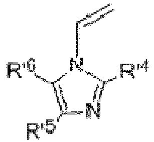 wherein the substituents R'⁴, R'⁵ and R'⁶ independently are hydrogen, C₁₋₄ alkyl or phenyl , preferably having the substitution patterns as defined in the following Table:

| R'⁴ | R'⁵ | R'⁶ |
|---|---|---|
| H | H | H |
| CH₃ | H | H |
| H | CH₃ | H |
| H | H | CH₃ |
| CH₃ | CH₃ | H |
| H | CH₃ | CH₃ |
| CH₃ | H | CH₃ |
| Ph | H | H |
| H | Ph | H |
| H | H | Ph |
| Ph | CH₃ | H |
| Ph | H | CH₃ |
| CH₃ | Ph | H |
| H | Ph | CH₃ |
| H | CH₃ | Ph |
| CH₃ | H | Ph |

The monomers may be used as the respective salts of the acidic monomers. Suitable counterions comprise especially alkaline metal ions such as Li⁺, Na⁺ or K⁺, and alkaline earth and ammonium ions such as NH₄⁺ or ammonium ions with organic radicals.

The molar ratio monomer (A) / monomer (B) of the urocanic acid-type monomer (A) of formula (I) and the ethylenically unsaturated, hydrophilic monomer (B) in the copolymer according to the present invention is in the range of 10/90 to 70/30. More preferred is a molar ratio in the range of 20/80 to 60/40. Most preferred is a molar ratio of 30/70 to 50/50.

Depending on the molar ratio of the urocanic acid-type monomer (A) of formula (I) and the ethylenically unsaturated, hydrophilic monomer (B) in the copolymer according to the present invention, the conversion rate of the monomer (A) can be maximized.

The co-polymers according to the present invention have a weight average molecular weight M_{w} in the range of from 3,000 g/mol to 500,000 g/mol, preferably of from 4,000 g/mol to 100,000 g/mol and most preferably of from 4,000 to 20,000 g/mol.

The molecular weight distribution as defined by the polydispersity index (PDI) of the co-polymers according to the present invention is in the range of from 1.1 to 2.8, preferably of from 1.3 to 2.6, and most preferably of from 1.5 to 2.5.

The weight average molecular weight and the number average molecular weight of the polymers and the resulting polydispersity index (PDI) according to the present invention is determined using gel permeation chromatography (GPC). The GPC method is described in G. Gloeckler, Polymer Characterization, Chromatographic Methods, Volume 17, Huthig-Verlag, Heidelberg, Germany in 1982.

The distribution of the molecular mass of the polymers according to the present invention is expressed by the polydispersity index (PDI) of the corresponding sample. The polydiversity index (PDI) is defined by the weight average molecular weight (M_{w}) divided by the number average molecular weight (Mₙ) of the corresponding polymer sample (PDI = M_{w} / Mₙ). The PDI of the polymer samples according to the present invention is determined by use of the GPC method as explained above.

The process of preparing a polymer from the monomer (A) of formula (I) according to the present invention is a radical co-polymerization process with at least one additional ethylenically unsaturated monomer (B).

For instance, urocanic acid as such when subjected to polymerization in the absence of any other monomer in an attempt to obtain the corresponding urocanic acid homopolymer (water, Wako V50 95°C) does not lead to successful polymerization. No hints of the corresponding homopolymer product can be obtained from such experimental approach.

The process for preparing the co-polymer according to the present invention is also a radical polymerization process which comprises at least the following steps: (a) optionally protonating the urocanic acid-type monomer (A) of formula (I) followed by (b) copolymerizing the protonated monomer (A) with at least one ethylenically unsaturated monomer (B), obtaining thereby the copolymer according to the present invention.

Successful radical copolymerizaton of the urocanic acid-type monomer (A) of formula (I) with an additional ethylenically unsaturated monomer (B) typically requires protonation, like for instance when acrylic acid is used, and dissolution of the monomer (A). However, in some cases like for instance when vinylimidazol is used, the addition of acid is not even mandatory.

Protonation and dissolution of the urocanic acid-type monomer (A) of formula (I) before radical co-polymerization is preferably carried out by addition of an acid additive to the monomer (A) before starting the radical polymerization process.

The required degree of protonation of urocanic acid-type monomer (A) of formula (I) for effective co-polymerization must be at least 50 %, preferably 70 % and most preferably at least 90 %. Best results will be achieved in terms of effective radical polymerization when an at least equimolar amount of the acidic additive relative to the monomer (A) is used and essentially all of the monomer (A) will be protonated (100% degree of protonation).

Accordingly, when protonating the urocanic acid-type monomer (A) of formula (I) in step a) of the radical co-polymerization process according to the present invention, the molar ratio for the monomer (A) and the acidic additive is in the range of between 2 to 0.9, preferably between 1.2 to 0.95, and most preferably between 1.1 and 1.0.

The acid additive to be used for protonation and dissolution of the urocanic acid-type monomer (A) of formula (I) must be carefully selected in order achieve radical co-polymerization of the monomer (A) while other side reactions particularly Michael addition-type reactions are carefully avoided.

The acidic additive preferably has a pKₐ value in water at 25°C in the range of -6.0 to 5.0, more preferably from -6.0 to 3.0. Suitable acid additives are methane sulfonic acid, phosphoric acid, sulfuric acid, hydrochloric acid, acetic acid, citric acid, ascorbic acid and the like. Most preferred acid additives are methane sulfonic acid or phosphoric acid. On the other hand, lactic acid was found to be unsuitable to effect co-polymerization and is therefore excluded from the present invention.

The radical co-polymerization process according to the present invention can be initiated by conventional radical polymerization initiators. Radical initiators that can be used for starting the co-polymerization process according to the present invention preferably are hydroperoxides, peroxodisulfates, percarbonates, peroxo esters, hydrogen peroxides, and azo compounds and the like.

Especially preferred radical polymerization inhibitors according to the present invention are hydrogen peroxide, dibenzoyl peroxide, dicyclohexyl peroxodicarbonate, dilauroyl peroxide, methyl ethyl ketone peroxide, di-tert-butyl peroxide, acetylacetone peroxide, tert-butyl hydroperoxide, cumyl hydroperoxide, p-methyl hydroperoxide, tert-butyl perneodecanoate, tert-amyl perpivalate, tert-butylperpivalate, tert-butyl perneohexanoate, tert-butyl per-2-ethylhexanoate, tert-butyl perbenzoate, lithium, sodium, potassium and ammonium peroxodisulfates, 2,2'-azobis(isobutyronitrile), 2,2'-azobis(2,4-dimethylvaleronitrile), 2,2'-azobis(2-amidinopropyl)dihydrochloride,2,2`-Azobis(2-methylpropionamidine)dihydrochloride, 2-(carbamoylazo)isobutyronitrile, 4,4-azobis(4-cyanovaleric acid), 2, 2`-Azobis[2-(2-imidazolin-2-yl)propane]dihydrochloride, 2,2`-Azobis[2-(2-imidazolin-2-yl)propane]disulfatedihydrate, 2,2'-Azobis[N-(2-carboxyethyl)-2-methylpropionamidine]hydrate, 2,2`-Azobis{2[1-(2-hydroxyethyl) -2 imidazolin-2yl]propane}dihydrochloride, 2,2`-Azobis[2-(2-imidazolin-2-yl)propane], 2,2-Azobis(1-imino-1-pyrrolidino-2-ethylpropane)dihydrochloride, 2, 2`-Azobis{2-methyl-N-[1,1-bis(hydroxymethyl)-2-hydroxyethyl]propionamide}, and 2,2`-Azobis[2-methyl-N-(2-hydroxyethyl)propionamide

The amount of radical polymerization initiator to be used in step b) of the co-polymerization process according to the present invention is in the range of 1 to 10 wt.-% based on the total weight of the monomers (A) and (B), preferably in the range of 2 to 8 wt.-% based on the total weight of the monomers (A) and (B), and most preferably in the range of 3 to 6 wt.-% based on the total weight of the monomers (A) and (B).

The radical polymerization process according to the present invention is preferably carried out in aqueous solution. That is, at least step b) which is the co-polymerization of urocanic acid-type monomer (A) of formula (I) with at least one further ethylenically unsaturated monomer (B) is carried out in aqueous solution, while it is even more preferred that also step a) which comprises the protonating of monomer (A) is also carried out in aqueous solution. The preferred aqueous solution is water.

The temperature at which the radical co-polymerization process according to the present invention is carried out is in the range of between 60 to 99°C, preferably in the range of between 75 to 95°C and most preferably in the range of between 90 to 95°C. Such temperature is at least applied for step b) of the radical co-polymerization process according to the present invention which is the co-polymerization of urocanic acid-type monomer (A) of formula (I) with at least one further ethylenically unsaturated monomer (B). More preferably, both steps a) and b) of the radical co-polymerization process according to the present invention are carried out at such temperature range.

The reaction time at which the radical co-polymerization process according to the present invention is performed is as follows. For step a) of the radical co-polymerization process of the present invention, the reaction time is in the range of 0 to 30 minutes, preferably 5 to 20 min. For step b) of the radical co-polymerization process of the present invention, the reaction time is in the range of 0.5 to 30, preferably 4 to 25 hours.

Without wishing to be bound to a particular theory or certain functional understanding of the claimed radical co-polymerization process, it is believed that particularly the urocanic acid moiety possesses a conjugated electron push-pull system in which electrons can be pushed from the electron-rich imidazole ring via the conjugated double bond electrons to the electron attracting carboxyl group. This leads to delocalization of the double bond electrons that can be considered for polymerization. Such electron delocalization as well as a steric hindrance of the double bond may then prevent straight-forward polymerization of urocanic acid particularly towards the corresponding homo-polymer.

Still, even when urocanic acid is protonated by addition of equimolar amounts of additional acid additives like methanesulfonic acid, no radical homo-polymerization was observed despite the fact that the acidic medium increases the solubility of urocanic acid in water while even the electron push-pull system is destroyed and the reactivity of the double bond should be increased. Therefore, it seems that the double bond in urocanic acid is still sterically hindered and the presence of a second type of monomer is required for (co)polymerization.

Nonetheless, in the light of such findings, the present invention has surprisingly established that effective radical co-polymerization of urocanic acid-type monomer (A) of formula (I) with at least another reactive ethylenically unsaturated monomer (B) such as acrylic acid have been obtained. Moreover, the radical co-polymerization process according to the present invention allowed achieving high conversion rates of up to 85 % for the monomer (A) of formula (I) according to the present invention.

The present invention also relates to compositions comprising the co-polymers according to the present invention. Such compositions comprise the copolymers according to the present invention as components and are suitable in a variety of different industrial applications and products including laundry compositions and cosmetic compositions.

Laundry compositions include laundry detergent compositions and laundry cleaning compositions. One important field of application of the co-polymers of the present invention relates to the loss of color of clothing upon repeated washing. The co-polymers according to the present invention are suitable dye transfer inhibitors.

Cosmetic compositions include skin cleansing compositions, compositions for care and protection of skin, nail care compositions, formulations for decorative cosmetics, conditioners, shampoos, creams, shower or bath soap products, hair treatment compositions and the like.

In the following the invention is described by way of examples.

### Examples

Initial Urocanic Acid Polymerization Experiments:

| Monomer | Ratio | Solvent | Additive | Initiator | Molecular Mass | NMR Analysis |
|---|---|---|---|---|---|---|
| UA | 100 | Water | none | Wako V50 | n.d. | no polymerization |
| UA | 100 | Water | methane sulfonic acid | Wako V50 | n.d. | no polymerization |
| UA/AA | 50 / 50 | Water | methane sulfonic acid | Wako V50¹⁾ | 6500 | UA / AA copolymer, 45 % conversion of UA; ^{*)} |
| UA/AA | 30 / 70 | water | methane sulfonic acid | Wako V50 | 6100 | UA / AA copolymer, 85 % conversion of UA; ^{*)} |
| UA/AA | 30 / 70 | water | phosphoric acid | Wako V50 | 5000 | UA / AA copolymer, 70 % conversion of UA |

| | | | | | | |
|---|---|---|---|---|---|---|
| UA urocanic acid; AA acrylic acid ^{*)} after radical co-polymerization, dialysis led to pure UA / AA copolymer The following chemicals were purchased as follows: UA from Aldrich, AA and methane sulfonic acid from BASF, Wako V50 from WAKO Chemicals GmbH, lactic acid from Fluka, phosphoric acid 85% from Riedel-de Haen. | | | | | | |

The initial polymerization tests confirm that urocanic copolymers can preferably be obtained in the presence of an acid additive. Under alkaline or neutral conditions, polymerization of urocanic acid monomer is usually not obtained. Further, urocanic acid monomer could not be converted into the corresponding homo-polymer in the absence of an additional ethylenically unsaturated monomer (B).

Very good conversion rates of urocanic acid monomer (A) during copolymerization with ethylenically unsaturated unsaturated monomer (B) was found at a molar ratio of urocanic acid monomer (A) to the second ethylenically unsaturated monomer (B) in the range of 30/70 to 50/50.

### Preparation of Urocanic Acid Copolymers:

### Preparation Example 1:

In a reaction flask, that is equipped with a stirrer, temperature control, nitrogen injection and two injection possibilities, 0.18 mol urocanic acid, 0.18 mol methane sulfonic acid and 51.2 g deionized water were provided. The mixture is flooded with nitrogen for 15 min and is heated up to 90°C under nitrogen. 0.42 mol acrylic acid in 20 g deionized water is added in 5h and 1.66 g Wako V50 in 40 g deionized water are added in 6h. After 2h stirring at 90°C, 1.66 g Wako V50 in 30 g water is added in 4h. The mixture is stirred for further 2h at 90°C. A clear, slightly yellow solution is obtained. The molecular mass (M_{w}) of the urocanic acid-acrylic acid copolymer is determined with 6150 g/mol with a PDI of 1.6 according to GPC. As a standard pullulan was used.

### Preparation Example 2:

In a reaction flask, that is equipped with stirrer, temperature control, nitrogen injection and two injection possibilities, 0.18 mol urocanic acid, 0.18 mol methane sulfonic acid and 39.4 g deionized water were provided. The mixture is flooded with nitrogen for 15 min and is heated up to 95°C under nitrogen, 0.18 mol acrylic acid in 11.4 g deionized water are added in 5h and 0.75 g Wako V50 in 25 g deionized water are added in 6h. After 2h stirring at 95°C, 0.75 g Wako V50 in 25 g water is added in 4h. The mixture is stirred for further 2h at 95°C. A clear, slightly yellow solution is obtained. The molecular mass (M_{w}) of the urocanic acid-acrylic acid copolymer is determined with 6550 g/mol with a PDI of 1.5 according to GPC. As a standard pullulan was used.

### Preparation Example 3:

In a reaction flask, that is equipped with stirrer, temperature control, nitrogen injection and two injection possibilities, 0.18 mol urocanic acid, 62.3 g phosphoric acid (85%) and 48.4 g deionized water were provided. The mixture is flooded with nitrogen for 15 min and is heated up to 90°C under nitrogen. 0.42 mol acrylic acid in 20 g deionized water is added in 5h and 1.66 g Wako V50 in 40 g deionized water are added in 6h. After 2h stirring at 90°C, 1.66 g Wako V50 in 30 g water is added in 4h. The mixture is stirred for further 2h at 90°C. A clear, slightly, yellow solution is obtained. The molecular mass (M_{w}) of the urocanic acid-acrylic acid copolymer is determined with 5050 g/mol with PDI of 1.6 according to GPC. As a standard pullulan was used.

### Preparation Example 4:

In a reaction flask, that is equipped with stirrer, temperature control, nitrogen injection and two injection possibilities, 0.18 mol urocanic acid and 48.4 g deionized water were provided. The mixture is flooded with nitrogen for 15 min and is heated up to 90°C under nitrogen. 0.42 mol vinylimidazole in 20 g deionized water are added in 5h and 1.93 g Wako V50 in 30 g deionized water are added in 6h. After 2h stirring at 90°C, 1.93 g Wako V50 in 30 g water is added in 4h. After 2h stirring at 90°C, again 1.93 g Wako V50 in 30 g water is added in 4h. The mixture is stirred for further 2h at 90°C. A clear, slightly yellow solution is obtained. No residual monomer can be detected by ¹H-NMR spectroscopy. The molecular mass (M_{w}) of the urocanic acid-vinylimidazole copolymer is determined with 6850 g/mol with a PDI of 2.5 according to GPC. As a standard polyvinylpyrrolidone was used.

### Test Example: Dye Transfer Inhibition

The polymer prepared according to Preparation Example 4 was tested as dye transfer inhibitor. 0.2 wt-% of polymer prepared according to Preparation Example 4 were added to a liquid detergent base formulation. 1.25 g of the mixture was added to 250 ml of water with a hardness of 2.5 mmol/l and a Ca/Mg molar ratio of 4:1. A colored cotton cloth (Direct Red 83.1) and an un-colored cotton cloth were agitated in the solution at 40°C for 30 min. The cloth was removed, rinsed with water and dried. The whiteness of the cloth was determined by a reflection photometer.

### Remission:

| | |
|---|---|
| Cloth untreated | 83% |
| Cloth treated with base formulation without polymer | 70.8 % |
| Cloth treated with base formulation plus polymer according to Preparation Example 4 | 79.1 % |

The data show the high dye transfer inhibiting performance of the polymer according to the invention and the usefulness of the copolymers according to the present invention for laundry applications.

## Claims

1. A copolymer comprising units derived from
(A) at least one urocanic acid-type monomer of formula (I) or a salt thereof 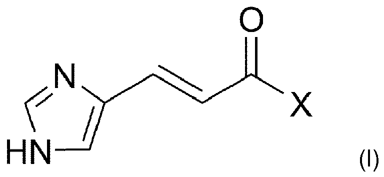 wherein X is OR¹ or NR²R³,
wherein further
R¹ is H or C₁-C₆ alkyl, and
R² and R³ are independently from each other H or C₁-C₆ alkyl;
and
(B) at least one ethylenically unsaturated monomer different to the monomer (A) of formula (I) or its salt thereof.

2. The copolymer according to claim 1, wherein the monomer (B)
(a) is a non-aromatic ethylenically unsaturated monomer;
and/or
(b) is water soluble.

3. The copolymer according to any one of the preceding claims, wherein the monomer (B) is an α,β unsaturated carbonyl compound, a vinylimidazole compound or an acrylonitrile compound, preferably the monomer (B) is selected from group consisting of acrylic acid, methacrylic acid, maleic acid, fumaric acid, itaconic acid, crotonic acid, acrylamide, methacrylamide, N-vinylimidazole and acrylonitrile.

4. The copolymer according to any one of the preceding claims, wherein the molar ratio between the monomer (A) and the monomer (B) [(A)/(B)] is in the range of 10/90 to 30/70.

5. The copolymer according to any one of the preceding claims, wherein the copolymer has a weight average molecular weight M_{w} measured according to the GPC method in the range of 3000 g/mol to 100,000 g/mol.

6. The copolymer according to any one of the preceding claims, wherein the copolymer has a molecular weight distribution (M_{w}/Mₙ) in the range of 1.1 to 2.5.

7. A radical polymerization process for the preparation of a copolymer according to at least one of the preceding claims 1 to 6 comprising at least the steps of
(a) optionally protonating the urocanic acid-type monomer (A) of formula (I), and then
(b) copolymerizing the protonated monomer (A) with at least one ethylenically unsaturated monomer (B), obtaining thereby the copolymer as defined in any one of the preceding claims 1 to 6.

8. The process according to claim 7, wherein the protonation of the urocanic acid-type monomer (A) of formula (I) is accomplished by an acidic additive, wherein preferably said acidic additive
(a) has a pKₐ value in water at 25 °C in the range of -6.0 to 5.0,
and/or
(b) is selected from the group consisting of phosphoric acid, methane sulfonic acid, acetic acid, citric acid and ascorbic acid.

9. The process according to any one of the preceding claims 7 or 8, wherein step (b) is initiated by a radical polymerization initiator, said polymerization initiator is preferably selected from the group consisting of peroxides, hydroperoxides, peroxodisulfates, percarbonates, peroxo esters, hydrogen peroxides and azo compounds.

10. The process according to any one of the preceding claims 7 to 9, wherein at least step (b), preferably steps (a) and (b), take(s) place in aqueous solution.

11. The process according to any one of the preceding claims 7 to 10, wherein the temperature is at least in step (b), preferably in steps (a) and (b), in the range of 60 to 99 °C.

12. The process according to any one of the preceding claims 7 to 11, wherein the reaction time of the radical co-polymerization in
(a) step (a) is in the range of 0 to 30 min
and/or
(b) step (b) is in the range of 4 to 25 h.

13. The process according to any one of the preceding claims 7 to 12, wherein
(a) the molar ratio between the monomer (A) and the acidic additive in step (a) is from 2 to 0.9,
and/or
(b) the molar ratio between the protonated monomer (A) and the ethylenically unsaturated monomer (B) in the co-polymerization step (b) is in the range of 10/90 to 70/30,
and/or
(c) the amount of the radical polymerization initiator used in step (b) is in the range of 1 to 10 wt.-% based on the total weight of the monomers (A) and (B).

14. A composition comprising at least one copolymer according to one or more of the preceding claims 1 to 6.

15. The composition according to claim 14, wherein said composition is composition selected from the group consisting of cosmetic composition, laundry detergent and laundry cleaner, preferably selected from the group consisting of a skin cleansing composition, a composition for care and protection of the skin, a nail care composition, a formulation for decorative cosmetics and a hair treatment composition.
